# EUROPÄISCHE PATENTSCHRIFT

(11) **EP 2 687 571 B1**
(45) Veröffentlichungstag und Bekanntmachung des Hinweises auf die Patenterteilung: **10.12.2014**
(21) Anmeldenummer: 13176227.0
(22) Anmeldetag: 12.07.2013
(51) Int. Cl.: C09J 127/06, C08K 5/1535

(54) **Mittel zum Verkleben von Formteilen aus PVC**
Means for gluing articles made of PVC
Moyen de collage de pièces moulées en PVC

(30) Priorität: 19.07.2012 DE 102012212736
(43) Veröffentlichungstag der Anmeldung: 22.01.2014
(73) Patentinhaber: Henkel AG & Co. KGaA, 40589 Düsseldorf (DE)
(72) Erfinder: Beuer, Bernd, 40789 Monheim (DE); Beck, Horst, 41470 Neuss (DE); Trauten, Rita, 40627 Düsseldorf (DE)

(56) Entgegenhaltungen:
- EP-A2- 0 197 481

## Beschreibung

Die Erfindung liegt auf dem Gebiet der Klebemittel. Sie betrifft insbesondere ein Mittel zur Verklebung von Formteilen aus PVC sowie ein Verfahren zum stoffschlüssigen Verbinden von PVC-Rohren sowie einen Rohrverbund aus mindestens zwei PVC-Rohren.

Bei der Verklebung von Formteilen aus Kunstoffen, wie z.B. aus PVC, beispielsweise von PVC-Druckrohren, sind solche Verklebungsmittel gebräuchlich, die festes Polymer, gelöst in einem geeigneten Lösemittel oder Lösemittelsystem enthalten. Das Klebeprinzip beruht auf dem Quell-, Löse- und Diffusionsvermögen der Lösemittel. Die Lösemittel diffundieren in das Grundmaterial, quellen es an und führen unter Mitwirkung des gelöst eingebrachten Polymeranteils bei der Verpressung der Fügeteile zum Verbund. Über einen nicht exakt zu definierenden Zeitraum desorbieren die Lösemittel, so dass eine homogene Verbindung erreicht wird. Dieses Prinzip der Klebetechnik wird z.B. in der Europäischen Patentanmeldung EP 0 197 481 A2 beschrieben. Dort wird ein entsprechendes Mittel zur Verklebung von Formteilen aus Hart-PVC auf Basis einer PVC-Lösung in einem cyclische PVC-Löser enthaltenden flüssigen Lösergemisch bei PVC-Feststoffgehalten von etwa 10 bis 30 Gew.-% beschrieben. Die dort beispielhaft beschriebenen Klebemassen enthalten als cyclische PVC-Löser alle jeweils Tetrahydrofuran und Cyclohexanon.

Ausgehend von diesem bekannten Stand der Technik war es die Aufgabe der vorliegenden Erfindung, Klebstoffe zur Verklebung von Formteilen aus Kunststoffen, insbesondere aus PVC, zur Verfügung zu stellen, welche eine verlängerte Offenzeit aufweisen und insbesondere auch in dünnen Schichten eine verlängerte Offenzeit aufweisen, aber trotzdem zu einem sehr stabilen Klebverbund führen.

Diese Aufgabe wird vom Gegenstand der vorliegenden Erfindung gelöst. Der Gegenstand der vorliegenden Erfindung ist ein Mittel zur Verklebung von Formteilen aus PVC auf Basis einer PVC-Lösung in flüssigem Lösemittel, welches 2-Methyltetrahydrofuran umfasst, wobei das Mittel 10 bis 40 Gew.-% PVC, bezogen auf das Gesamtgewicht des Mittels, enthält.

Es konnte überraschenderweise gefunden werden, dass die erfindungsgemäßen 2-Methyltetra-hydrofuran-enthaltenden Mittel eine gegenüber herkömmlichen, THF-basierten Klebemassen verlängerte Offenzeit aufweisen und insbesondere auch in dünnen Schichten eine gegenüber herkömmlichen, THF-basierten Klebemassen verlängerte Offenzeit zeigen, aber trotzdem einen stabilen Klebverbund, insbesondere wärmestabilen Klebverbund, von PVC-Formteilen ermöglichen. Eine dünne Schicht im Sinne dieser Erfindung hat vorzugsweise eine Dicke von ca. 0,1 bis 3 mm.

Insbesondere ermöglicht das erfindungsgemäße Mittel trotz verlängerter Offenzeit auch eine hinreichende Frühfestigkeit des Klebverbundes von PVC-Formteilen. Weiterhin sind die erfindungsgemäßen Mittel sehr lagerstabil, verfügen über gute Verarbeitungseigenschaften und sind auch über längere Zeit viskositätsstabil. Das Klebemittel zeigt ein ausgezeichnetes Spaltüberbrückungsverhalten, es bietet höchsten Schutz gegen Leckagen.

Gemäß einer bevorzugten Ausführungsform der Erfindung handelt es sich bei den erfindungsgemäß zu verklebenden Formteilen aus PVC um Rohre, Fittings und/oder Rohrleitungsbestandteile. Selbstverständlich kann die Erfindung auch bei allen übrigen PVC-Formteilen, wie z.B. Regenrinnen, PVC-Plattenmaterial, wie z. B. Auffangwannen, Gehäusekästen mit Erfolg eingesetzt werden.

Mit dem Begriff "Fitting" werden die Verbindungsstücke einer Rohrleitung bezeichnet. Diese Verbindungsstücke ermöglichen z.B. die insbesondere gerade Verbindung von Rohrstücken, aber auch Rohrverbindungen unter Richtungswechsel oder Durchmesserwechsel sowie die Verbindung zu Einbauteilen. Der Einsatz von Fittings ermöglicht insbesondere die einfache Anpassung des Rohrleitungsverlaufs an die äußeren Gegebenheiten, also z.B. das Umgehen von Hindernissen, die Ausführung von Verzweigungen und Durchmesserwechsel usw. Der Verlauf einer Rohrleitung kann den konstruktiven Erfordernissen somit einfach angepasst werden. Der Begriff "Fitting" ist überall in der Rohrleitungsplanung als auch in der Installationstechnik gebräuchlich.

Die Erfindung ermöglicht dauerhaft stabile, hochfeste Verbindungen der PVC-Formteile, insbesondere ermöglicht sie dauerhaft stabile, hochfeste Rohrverbindungen, welche eine Lebensdauer aufweisen, die der Lebensdauer eines Rohres entspricht und welche den allgemein üblichen Güte- und Prüfanforderungen, wie sie insbesondere auch für Druckrohrleitungen gelten, entsprechen. Die erfindungsgemäß erzielbare Klebeverbindung weist eine sehr gute Lichtbeständigkeit, eine sehr gute Lösemittelbeständigkeit, eine sehr gute Hydrolysebeständigkeit, sehr gute Tief- und Hochtemperaturbeständigkeit und eine sehr gute Schlagzähigkeit auf. Insbesondere ist auch eine sehr gute Scherfestigkeit der Klebeverbindung erzielbar. Der Klebstoff ist problemlos applizierbar, z.B. über Pinsel.

Im Sinne der Erfindung sind jegliche Formteile aus PVC verklebbar, insbesondere solche auf Basis von PVC-U oder PVC-C.

PVC, also Polyvinylchlorid, ist dem Fachmann bestens bekannt. Es kann technisch insbesondere durch Suspensionspolymerisation (S-PVC), Mikrosuspensionspolymerisation, Emulsionspolymerisation (E-PVC) und Substanzpolymerisation bzw. Massepolymerisation (M-PVC) hergestellt werden, wobei Suspensionspolymerisationsverfahren die weitaus größte Bedeutung haben.

PVC-C ist das Kurzzeichen nach DIN EN ISO 1043-1: 2002-06 für chloriertes Polyvinylchlorid. Chloriertes Polyvinylchlorid ist insbesondere herstellbar durch Chlorierung von Polyvinylchlorid (PVC) im Wirbelbett-, Dispersions- oder Lösungsverfahren und wird gewöhnlich als farbloses Pulver mit einem Chlor-Gehalt von vorzugsweise ca. 62-73 % und einer Dichte von vorzugsweise ca. 1,5-1,58 g/cm³ vermarktet. Durch die Chlorierung werden insbesondere die Thermostabilität und Wärmeformbeständigkeit des Polyvinylchlorids erhöht.

PVC-U ist das Kurzzeichen nach DIN EN ISO 1043-1: 2002-06 für Hart-PVC, welches Gehalte an Weichmachern von vorzugsweise 0-12 Gew.-% aufweisen kann. Insbesondere sind erfindungsgemäß zu verklebende Formteile auf Basis PVC-U weichmacherfrei. Im Gegensatz dazu weist Weich-PVC Gehalte an Weichmachern >12 Gew.-% auf.

Der erfindungsgemäße Einsatz des Klebemittels führt bei der Verbindung von PVC-Formteilen zu Verbindungen exzellenter Qualität und dauerhafter Belastbarkeit, insbesondere bei PVC-Rohren zu Rohrverbindungen von exzellenter Qualität und dauerhafter Belastbarkeit.

Das erfindungsgemäße Klebemittel eignet sich hervorragend für die Rohrklebetechnik, sogar für den Einsatz bei korrosiven Medien unter hohen Temperaturen, aber auch für alle sonstigen Montage- und Reparaturarbeiten mit PVC-basierten Materialien (wie z. B. Regenrinnen). Das erfindungsgemäße Klebemittel eignet sich insbesondere auch für Konstruktionsklebungen mit PVC-Plattenmaterial (wie z. B. Auffangwannen, Gehäusekästen).

Gemäß einer weiteren bevorzugten Ausführungsform der Erfindung weist das erfindungsgemäße Klebemittel das 2-Methyltetrahydrofuran in Mengen > 10 Gew.-%, vorzugsweise in Mengen von 15 bis 80 Gew.-%, vorteilhafterweise in Mengen von 20 bis 60 Gew.-%, insbesondere in Mengen von 25 bis 50 Gew.-% auf, bezogen auf das gesamte Klebemittel. Besonders gute Ergebnisse mit Blick auf die auch bei Anwendung in dünnen Schichten gewünschte verlängerte Offenzeit und mit Blick auf das Erreichen eines sehr stabilen Klebverbundes ergeben sich bei Einsatz von 2-Methyltetrahydrofuran in Mengen von 25 bis 35 Gew.-%, bezogen auf das gesamte Klebemittel.

Gemäß einer weiteren bevorzugten Ausführungsform der Erfindung weist das erfindungsgemäße Klebemittel 10 bis 30 Gew.-%, vorzugsweise 10 bis 25 Gew.-%, insbesondere 15 bis 25 Gew.-% PVC auf, bezogen auf das gesamte Klebemittel.

Bevorzugt im Sinne der Erfindung einsetzbar ist z.B. PVC-Pulver, insbesondere hergestellt durch Suspensionspolymerisation. Bevorzugt einsetzbares PVC-Pulver hat eine Schüttdichte von vorzugsweise 400 bis 700 g/l. Der K-Wert des erfindungsgemäß bevorzugt einsetzbaren PVC beträgt vorzugsweise 40 bis 80, insbesondere 50 bis 60. Der K-Wert und Methoden zu seiner Bestimmung sind dem Fachmann bekannt. Der K-Wert ist eine relative Viskositätszahl, die bei 25°C bestimmt wird, vorzugsweise in Analogie zur DIN 53726.

Das erfindungsgemäße Klebemittel enthält als Lösemittel zwingend 2-Methyltetrahydrofuran, es kann vorzugsweise auch Mischungen aus 2-Methyltetrahydrofuran und THF enthalten. Grundsätzlich ist, bei Einsatz einer Mischung, umfassend 2-Methyltetrahydrofuran und THF, das Mischungsverhältnis frei wählbar. Sofern THF in Kombination mit 2-Methyltetrahydrofuran eingesetzt wird, ist es aber bevorzugt 2-Methyltetrahydrofuran in Bezug zum THF im Überschuss einzusetzen.

Typische aus dem Stand der Technik bekannte, herkömmliche Klebemittel für PVC-Formkörper enthalten üblicherweise kein 2-Methyltetrahydrofuran, aber größere Mengen THF, in der Regel zumindest 20 Gew.-% oder zumindest 30 Gew.-% THF, bezogen auf das jeweilige Klebemittel. Im Gegensatz dazu enthält das erfindungsgemäße Klebemittel gemäß einer bevorzugten Ausführungsform der Erfindung weniger als 30 Gew.-%, bevorzugt weniger als 20 Gew.-%, vorzugsweise weniger als 10 Gew.-%, vorteilhafterweise weniger als 5 Gew.-%, noch vorteilhafter weniger als 1 Gew.-% THF, insbesondere weniger als 0,1 oder weniger als 0,01 Gew.-% THF. Z.B. kann das erfindungsgemäße Klebemittel auch gänzlich frei von THF sein. Sofern THF eingesetzt wird, kann eine sinnvolle Untergrenze für das THF, bezogen auf das gesamte Klebemittel, z.B. bei 0,001 Gew.-%, 0,1 Gew.-% oder auch 1 Gew.-% liegen.

Weiterhin ist es möglich, neben dem 2-Methyltetrahydrofuran weitere Lösungsmittel einzusetzen, welche insbesondere ausgewählt sind aus cyclischen Ethern, alyklsubstituierten cyclischen Ethern, Cyclohexanon, Butan-2-on, 2-Ethyl-Tetrahydrofuran, 1,4-Dioxan, alkylsubstituiertem 1,4-Dioxan, Tetrahydropyran, alkylsubstituiertem Tetrahydropyran, Methylal, Ethylal, Butylal, N-Methyl-2-pyrrolidon, N-Ethyl-2-pyrrolidon, Furan, 2-Methylfuran, 3-Methylfuran und/oder 2,5-Dimethylfuran.

Im Sinne einer weiteren bevorzugten Ausführungsform der Erfindung umfasst das erfindungsgemäße Klebemittel neben dem 2-Methyltetrahydrofuran noch zumindest ein weiteres cyclisches Lösemittel, insbesondere Cyclohexanon. Das oder die weiteren cyclischen Lösemittel sind vorzugsweise in einer Menge von 5 bis 40 Gew.-%, vorteilhafterweise 10 bis 30 Gew.-%, insbesondere 15 bis 25 Gew.-% enthalten, bezogen auf das gesamte Klebemittel.

Noch bessere Ergebnisse im Sinne der Erfindung können allerdings erzielt werden, wenn das erfindungsgemäße Klebemittel weiterhin zumindest ein nicht-cyclisches Lösemittel umfasst, insbesondere Butan-2-on, was einer weiteren bevorzugten Ausführungsform der Erfindung entspricht. Bevorzugte Mengen an nicht-cyclischem Lösemittel, die in dem erfindungsgemäßen Klebemittel enthalten sein können, betragen z.B. 5 bis 60 Gew.-%, vorteilhafterweise 15 bis 50 Gew.-%, insbesondere 20 bis 30 Gew.-%, bezogen auf das gesamte Klebemittel.

Ein erfindungsgemäßes Mittel, welches eine Kombination aus 2-Methyltetrahydrofuran, Cyclohexanon und Butan-2-on enthält, entspricht einer weiteren bevorzugten Ausführungsform der Erfindung und hat sich besonders bewährt.

Die Gesamtmenge an Lösemittel, welche in dem Klebemittel vorteilhafterweise enthalten ist, beträgt vorzugsweise 50 bis 95 Gew.-%, vorzugsweise 60 bis 90 Gew.-% und insbesondere 70 bis 85 Gew.-%, bezogen auf das gesamte Klebemittel.

Die Gesamtmenge an 2-Methyltetrahydrofuran, Cyclohexanon und Butan-2-on, welche in dem Klebemittel vorteilhafterweise enthalten ist, beträgt vorzugsweise 50 bis 95 Gew.-%, vorzugsweise 60 bis 90 Gew.-% und insbesondere 70 bis 85 Gew.-%, bezogen auf das gesamte Klebemittel.

Ein besonders bevorzugtes erfindungsgemäßes Klebemittel umfasst gemäß einer bevorzugten Ausführungsform der Erfindung:
20 bis 60 Gew.-%, vorzugsweise 25 bis 40 Gew.-% 2-Methyltetrahydrofuran,
10-50 Gew.-%, vorzugsweise 15 bis 30 Gew.-% Butan-2-on,
10-30 Gew.-%, vorzugsweise 15 bis 25 Gew.-% Cyclohexanon,
10-35 Gew.-%, vorzugsweise 15 bis 25 Gew.-% PVC,
wobei das Mittel vorzugsweise weniger als 10 Gew.-%, wie z.B. 0,1 bis 9 Gew.-%, weiter bevorzugt weniger als 5 Gew.-%, vorteilhafterweise weniger als 1 Gew.-% und insbesondere gar kein THF enthält, Gew.-% jeweils bezogen auf das gesamte Mittel.

Weiterhin entspricht es einer bevorzugten Ausführungsform der Erfindung, wenn das erfindungsgemäße Klebemittel Siliciumdioxid, vorzugsweise pyrogene Kieselsäure, insbesondere hydrophile pyrogene Kieselsäure umfasst, vorzugsweise in Mengen von 0,05 bis 4 Gew.-%, bezogen auf das gesamte Klebemittel. Der optionale Einsatz des Siliciumdioxids führt im Zusammenspiel mit den übrigen Komponenten zu einem weiter verbesserten Eigenschaftsprofil der Klebemasse, insbesondere mit Blick auf die Optimierung von Offenzeit, Lagerstabilität und Verarbeitbarkeit der Klebmasse. Dabei hat sich insbesondere hydrophile pyrogene Kieselsäure bewährt, vorzugsweise solche mit einer spezifischen Oberfläche im Bereich von 100 m²/g bis 300 m²/g.

Weiterhin entspricht es einer bevorzugten Ausführungsform der Erfindung, wenn das erfindungsgemäße Klebemittel eine oder mehrere Metallseifen enthält.

In Abgrenzung zu den wasserlöslichen Natrium- und Kaliumsalzen der gesättigten und ungesättigten natürlichen und synthetischen Fettsäuren, Harzsäuren und Naphthensäuren bezeichnet man die wenig wasserlöslichen Metallsalze dieser Säuren als Metallseifen. Diese können insbesondere mit Lithium, Aluminium, Magnesium, Calcium, Mangan, Eisen, Zirconium, Cerium, Zink, Cobalt und/oder Vanadium als Kation formuliert sein.

Besonders geeignete optional einsetzbare Metallseifen sind Calciumstearat, Calciumlaurat, Bariumstearat, Bariumlauart, Zinkstearat, Zinklaurat und/oder Magnesiumstearat. Die am meisten bevorzugte optional einsetzbare Metallseife ist Calciumstearat.

Die optional einsetzbare Metallseife, insbesondere Calciumstearat, kann vorteilhafterweise in eine Menge von 0,01 bis 2 Gew.-%, insbesondere 0,05 bis 1 Gew.-% in dem Klebemittel eingesetzt werden.

Der optionale Einsatz der Metallseife führt im Zusammenspiel mit den übrigen Komponenten ebenfalls zu einem weiter verbesserten Eigenschaftsprofil der Klebemasse, insbesondere mit Blick auf die Optimierung von Offenzeit, Lagerstabilität und Verarbeitbarkeit der Klebmasse. Dabei hat sich insbesondere Calciumstearat bewährt.

Weiterhin kann optional ein Carbonatsalz in dem Klebemittel enthalten sein, vorzugsweise Ammoniumcarbonat, vorteilhafterweise in einer Menge von 0,001 bis 1 Gew.-%, insbesondere 0,005 bis 0,5 Gew.-%.

Auch der optionale Einsatz des Carbonatsalzes führt im Zusammenspiel mit den übrigen Komponenten zu einem weiter verbesserten Eigenschaftsprofil der Klebemasse, insbesondere mit Blick auf die Optimierung von Offenzeit, Lagerstabilität und Verarbeitbarkeit der Klebmasse.

Ein besonders bevorzugtes erfindungsgemäßes Klebemittel umfasst gemäß einer bevorzugten Ausführungsform der Erfindung:
25 bis 40 Gew.-% 2-Methyltetrahydrofuran,
15 bis 30 Gew.-% Butan-2-on,
15 bis 25 Gew.-% Cyclohexanon,
15 bis 25 Gew.-% PVC,
0,05 bis 4 Gew.-% pyrogene Kieselsäure,
0,01 bis 2 Gew.-% Metallseife,
ggf. 0,001 bis 1 Gew.-% Ammoniumcarbonat,
wobei das Mittel vorzugsweise weniger als 10 Gew.-%, wie z.B. 0,1 bis 9 Gew.-%, weiter bevorzugt weniger als 5 Gew.-%, vorteilhafterweise weniger als 1 Gew.-% und insbesondere gar kein THF enthält, Gew.-% jeweils bezogen auf das gesamte Mittel.

Die erfindungsgemäßen Mittel können außerdem synthetische Verdicker, vorteilhafterweise auf Acrylat-Basis, wie vorzugsweise Acrylat-Copolymere, insbesondere in Mengen von 0 bis 2 Gew.-%, z.B. 0,01 bis 0,1 Gew.-% enthalten. Es ist aber ein Vorteil der vorliegenden Erfindung, dass auf solche Verdicker, wie z.B. Acrylat-Copolymere, auch ohne weiteres verzichtet werden kann, und dennoch eine adäquate Produktkonsistenz erzielbar ist. Unter den einsetzbaren synthetischen Verdickungsmitteln haben die Copolymere und Terpolymere von Acrylsäure und Methacrylsäure die größte Bedeutung.

Ein weiterer Gegenstand der vorliegenden Erfindung ist ein Verfahren zum stoffschlüssigen Verbinden von PVC-Rohren mittels Fitting,
wobei
(a) auf die Fügeoberfläche des Fittings und/oder auf die Fügeoberflächen der damit zu verbindenden Rohrenden ein Klebstoff aufgebracht wird, und danach
(b) Rohre und Fitting zusammengeschoben werden, und danach
(c) Aushärtenlassen des Klebstoffes erfolgt,
wobei als Klebstoff ein erfindungsgemäßes Klebemittel wie zuvor beschrieben eingesetzt wird.

Ein weiterer Gegenstand der vorliegenden Erfindung ist ein Verfahren zum stoffschlüssigen Verbinden von PVC-Rohren,
wobei die Rohrverbindung durch Zusammenschieben eines ersten Rohrendes mit einem zweiten Rohrende erzielt wird, wobei das eine Rohrende einen Aufnahmerohrteil und das andere Rohrende einen Einsteckrohrteil darstellt,
wobei vor dem Zusammenschieben der Rohrenden auf zumindest eine der miteinander zu verbindenden Fügeteiloberflächen ein Klebstoff aufgebracht wird und nach dem Zusammenschieben ein Aushärtenlassen des Klebstoffes erfolgt,
wobei als Klebstoff ein erfindungsgemäßes Klebemittel wie zuvor beschrieben eingesetzt wird.

Das Aufbringen des Klebemittels kann in den erfindungsgemäßen Verfahren prinzipiell auf jede mögliche Weise erfolgen. Es ist aber bevorzugt, dass das Aufbringen des Klebemittels mit Hilfe eines Auftragswerkzeuges, insbesondere durch Pinselauftrag erfolgt. Dadurch kann ein besonders gleichmäßiger Auftrag in gewünscht adäquater Dicke erreicht werden.

Um eine besonders gute Verbindung der Kunststoff-Rohre mit oder ohne Fitting im Sinne der Erfindung zu erzielen, ist es im Sinne einer bevorzugten Ausführungsform der Erfindung von Vorteil, wenn die Klebemittel-Filmstärke auf der Fügeteiloberfläche vor dem Zusammenfügen im Bereich 0,1 mm bis 3 mm, vorzugsweise 0,2 mm bis 1,5 mm, insbesondere 0,2 mm bis 0,6 mm liegt. Diese Klebemittel-Filmstärken führen in Verbindung mit dem eingesetzten Klebemittel bei PVC-Rohren zu Rohrklebungen mit ganz besonders hoher Lebensdauer.

Durch das Zusammenschieben von Rohr und Fitting oder Rohr und Rohr wird im Sinne der Erfindung die Klebeverbindung zwischen den Fügeteiloberflächen ermöglicht. Um eine ganz besondere dauerhaft sichere Rohrverbindung hervorbringen zu können, ist das erfindungsgemäße Verfahren im Sinne einer bevorzugten Ausführungsform vorteilhafterweise so auszuführen, dass das Zusammenschieben von Rohr und Fitting oder Rohr und Rohr ohne Verdrehen erfolgt.

Gemäß einer bevorzugten Ausführungsform der Erfindung zeichnet sich das erfindungsgemäße Verfahren dadurch aus, dass es sich bei den PVC-Rohren um Druckrohre handelt.

Druckrohre sind dem Fachmann an sich bekannt, sie werden für Druckrohrleitungen eingesetzt. Als Druckrohrleitung bezeichnet man eine Rohrleitung, in der im Gegensatz zu einer Freispiegelleitung ein größerer Druck herrscht als der atmosphärische Druck. Drucklose Anwendungen, also Gravitationsleitungen oder Freispiegelleitungen, können erfindungsgemäß selbstverständlich ebenfalls verwirklicht werden.

Die erfindungsgemäß bereitstellbaren Rohrverbindungen sind insbesondere für den Transport von Wasser einsetzbar, andere Medien sind jedoch ebenfalls ohne weiteres transportierbar, wie z.B. Glykolmischungen, welche z.B. als Kühlmittel Anwendung finden. Besonders bevorzugt ist jedoch der Wassertransport.

Gemäß einer bevorzugten Ausführungsform werden demnach die erfindungsgemäßen Rohrverbindungen insbesondere für Trinkwasserleitungen, Brauchwasserleitungen und/oder zur Druckentwässerung eingesetzt.

Ein weiterer Gegenstand der vorliegenden Erfindung ist ein Rohrverbund aus mindestens zwei PVC-Rohren mit oder ohne Fitting-Einsatz zwischen den Rohrenden, geeignet für Trinkwasserleitungen, Brauchwasserleitungen und/oder zur Druckentwässerung, wobei die Fügeteiloberflächen der miteinander verbundenen Fügeteile mit einem erfindungsgemäßen Klebemittel, wie zuvor beschrieben, befestigt sind. Diese unterscheiden sich von Rohrverbunden, die mittels herkömmlicher Verklebungsmittel, basierend auf in THF gelöstem PVC, erhalten werden dadurch, dass letztere auch Jahre nach der Verklebung noch nachweisbare Mengen an THF abgeben. Dies findet sich in dem Wasser oder sonstigen Gut, das das Rohr durchströmt, wieder, was insbesondere beim Einsatz des Rohrverbunds für Trinkwasserleitungen äußerst unerwünscht ist.

### Beispiel:

Das folgende Klebemittel wurde durch Mischen seiner Bestandteile unter Erwärmen auf 40°C hergestellt:

| | |
|---|---|
| 2-Methyltetrahydrofuran | 29,00 Gew.-% |
| Butan-2-on | 26,00 Gew.-% |
| Cyclohexanon | 23,39 Gew.-% |
| Aerosil 200 # | 1,50 Gew.-% |
| PVC | 20,00 Gew.-% |
| Calciumstearat | 0,10 Gew.-% |
| NH₄CO₃ | 0,01 Gew.-% |

| | |
|---|---|
| AEROSIL 200 ist eine hydrophile pyrogene Kieselsäure mit einer spezifischen Oberfläche von 200 m²/g von Evonik. | |

Das erfindungsgemäße Klebemittel hatte eine offene Zeit von 10 Minuten. Ein ansonsten völlig vergleichbares Mittel, bei welchem allerdings kein 2-Methyltetrahydrofuran, sondern an dessen Stelle THF eingesetzt worden ist, ansonsten war die Rezeptur gleich (THF-basierte Vergleichsrezeptur), wies unter gleichen Bedingungen eine offene Zeit von 7 Minuten auf.

Die offene Zeit ist die Zeit, in der zwei Fügeteile nach Auftragen eines Klebemittels noch miteinander gefügt werden können, ohne dass die Endfestigkeit beeinträchtigt wird. Die nachfolgend genannte Prüfmethode stellt ein vereinfachtes Verfahren zur Ermittlung der offenen Zeit dar. Hierbei wird der Zeitraum bestimmt, bei dem das ausgezogene Klebemittel nicht mehr an der Fingerkuppe haften bleibt.

Hierzu wurde mittels eines Rakels bei Raumtemperatur 22°C ein gleichmäßiger Klebemittelfilm von 100 mm Breite und 1 mm Filmdicke auf eine PVC Platte aufgebracht. Die Abtrocknung des Klebemittels wurde alle 30 Sekunden an der Oberfläche mittels Fingerkuppe geprüft. Blieb kein Klebemittel mehr an der Fingerkuppe haften, war die offene Zeit des Klebemittels beendet.

Die Viskosität des erfindungsgemäßen Klebemittels betrug 10350 mPas, gemessen mit Brookfield Viskosimeter LVT bei 20°C, Spindel 4 / 30 UPM.

Bei der THF-basierten Vergleichsrezeptur musste, um eine vergleichbar vorteilhafte Konsistenz erzielen zu können, zusätzlich noch ein Acrylat-Copolymer zugesetzt werden.

Das erfindungsgemäße Klebemittel erwies sich bei Lagerversuchen unter verschiedenen Bedingungen (bei 0°C; 23°C; 40°C) als sehr lagerstabil. Das Klebemittel war in der Lage, eine stabile Viskosität ausgehend vom Zeitpunkt der Formulierung bis zu einem Zeitraum, der sich über Wochen hinzog, aufrechtzuerhalten.

Das erfindungsgemäße Klebemittel zeigte ein ausgezeichnetes Spaltüberbrückungsverhalten. Es ermöglichte dauerhaft stabile, hochfeste Rohrverbindungen, welche den allgemein üblichen Güte- und Prüfanforderungen, wie sie insbesondere auch für Druckrohrleitungen gelten, entsprachen.

## Patentansprüche

1. Mittel zur Verklebung von Formteilen aus PVC auf Basis einer PVC-Lösung in flüssigem Lösemittel, **dadurch gekennzeichnet, dass** es 2-Methyltetrahydrofuran und 10 bis 40 Gew.-% PVC, bezogen auf das Gesamtgewicht des Mittels, umfasst.

2. Klebemittel nach Anspruch 1, **dadurch gekennzeichnet, dass** es 2-Methyltetrahydrofuran in Mengen > 10 Gew.-%, vorzugsweise in Mengen von 15 bis 80 Gew.-%, vorteilhafterweise in Mengen von 20 bis 70 Gew.-%, insbesondere in Mengen von 30 bis 60 Gew.-%, jeweils bezogen auf das Gesamtgewicht des Mittels, enthält.

3. Klebemittel nach einem der Ansprüche 1 oder 2, **dadurch gekennzeichnet, dass** es 10 bis 30 Gew.-%, vorzugsweise 10 bis 25 Gew.-%, insbesondere 15 bis 25 Gew.-% PVC, jeweils bezogen auf das Gesamtgewicht des Mittels, enthält.

4. Klebemittel nach einem der Ansprüche 1 bis 3, **dadurch gekennzeichnet, dass** es weniger als 20 Gew.-%, vorzugsweise weniger als 10 Gew.-%, vorteilhafterweise weniger als 5 Gew.-%, noch vorteilhafter weniger als 1 Gew.-% THF, jeweils bezogen auf das Gesamtgewicht des Mittels, enthält, insbesondere frei von THF ist.

5. Klebemittel nach einem der Ansprüche 1 bis 4, **dadurch gekennzeichnet, dass** es neben dem 2-Methyltetrahydrofuran noch zumindest ein weiteres cyclische Lösemittel, insbesondere Cyclohexanon, umfasst.

6. Klebemittel nach einem der Ansprüche 1 bis 5, **dadurch gekennzeichnet, dass** es zumindest ein nicht-cyclisches Lösemittel umfasst, insbesondere Butan-2-on.

7. Klebemittel nach einem der Ansprüche 1 bis 6, **dadurch gekennzeichnet, dass** die darin enthaltene Gesamtmenge an Lösemittel 50 bis 95 Gew.-%, vorzugsweise 60 bis 90 Gew.-% und insbesondere 70 bis 85 Gew.-%, jeweils bezogen auf das Gesamtgewicht des Mittels, beträgt.

8. Klebemittel nach einem der Ansprüche 1 bis 7, umfassend:
20-60 Gew.-% 2-Methyltetrahydrofuran,
10-50 Gew.-% Butan-2-on,
10-30 Gew.-% Cyclohexanon,
10-25 Gew.-% PVC, wobei die Mengenangaben jeweils auf das Gesamtgewicht des Mittels bezogen sind.

9. Verfahren zum stoffschlüssigen Verbinden von PVC-Rohren mittels Fitting,
wobei
(a) auf die Fügeoberfläche des Fittings und/oder auf die Fügeoberflächen der damit zu verbindenden Rohrenden ein Klebstoff aufgebracht wird, und danach
(b) Rohre und Fitting zusammengeschoben werden, und danach
(c) Aushärtenlassen des Klebstoffes erfolgt,
**dadurch gekennzeichnet, dass** als Klebstoff ein Klebemittel nach einem der Ansprüche 1 bis 8 eingesetzt wird.

10. Rohrverbund aus mindestens zwei PVC-Rohren mit oder ohne Fitting-Einsatz zwischen den Rohrenden, geeignet für Trinkwasserleitungen, Brauchwasserleitungen und/oder zur Druckentwässerung, **dadurch gekennzeichnet, dass** die Fügeteiloberflächen der miteinander verbundenen Fügeteile mit einem Klebemittel nach einem der Ansprüche 1 bis 8 befestigt sind.

## Claims

1. An agent for adhesively bonding shaped elements made of PVC, based on a solution of PVC in liquid solvent, **characterized in that** it comprises 2-methyltetrahydrofuran and 10 to 40 wt% PVC based on the total weight of the agent.

2. The adhesive agent according to Claim 1, **characterized in that** it contains 2-methyltetrahydrofuran in quantities > 10 wt%, preferably in quantities from 15 to 80 wt%, advantageously in quantities from 20 to 70 wt%, in particular in quantities from 30 to 60 wt%, based in each case on the total weight of the agent.

3. The adhesive agent according to one of Claims 1 or 2, **characterized in that** it contains 10 to 30 wt%, preferably 10 to 25 wt%, in particular 15 to 25 wt% PVC, based in each case on the total weight of the agent.

4. The adhesive agent according to one of Claims 1 to 3, **characterized in that** it contains less than 20 wt%, preferably less than 10 wt%, advantageously less than 5 wt%, even more advantageously less than 1 wt% THF, based in each case on the total weight of the agent, in particular is free of THF.

5. The adhesive agent according to one of Claims 1 to 4, **characterized in that** besides 2-methyltetrahydrofuran it also comprises at least one further cyclic solvent, in particular cyclohexanone.

6. The adhesive agent according to one of Claims 1 to 5, **characterized in that** it comprises at least one noncyclic solvent, in particular butan-2-one.

7. The adhesive agent according to one of Claims 1 to 6, **characterized in that** the total quantity of solvent contained therein is 50 to 95 wt%, preferably 60 to 90 wt%, and in particular 70 to 85 wt%, based in each case on the total weight of the agent.

8. The adhesive agent according to one of Claims 1 to 7, comprising
20 to 60 wt% 2-methyltetrahydrofuran,
10 to 50 wt% butan-2-one,
10 to 30 wt% cyclohexanone,
10 to 25 wt% PVC,
wherein the weight indications refer in each case to the total weight of the agent.

9. A method for materially attached connection of PVC pipes by means of a fitting, wherein
(a) an adhesive is applied onto the joining surface of the fitting and/or onto the joining surfaces of the pipe ends to be connected thereto, and then
(b) the pipe and fitting are slid together, and then
(c) the adhesive is allowed to cure,
**characterized in that** an adhesive agent according to one of Claims 1 to 8 is used as an adhesive.

10. A pipe assembly made up of at least two PVC pipes with or without fitting insertion between the pipe ends, suitable for potable water lines, industrial water lines, and/or for pressure drainage, **characterized in that** the joined part surfaces of the joined parts connected to one another are attached using an adhesive agent according to one of Claims 1 to 8.

## Revendications

1. Agent pour le collage de pièces moulées en PVC, à base d'une solution de PVC dans un solvant liquide, **caractérisé en ce qu'**il comprend du 2-méthyltétrahydrofuranne et de 10 à 40 % en poids de PVC, rapportés au poids total de l'agent.

2. Adhésif selon la revendication 1, **caractérisé en ce qu'**il contient du 2-méthyltétrahydrofuranne dans des quantités supérieures à 10 % en poids, de préférence dans des quantités de 15 à 80 % en poids, de manière avantageuse dans des quantités de 20 à 70 % en poids, en particulier dans des quantités de 30 à 60 % en poids, chaque fois rapportés au poids total de l'agent.

3. Adhésif selon l'une quelconque des revendications 1 ou 2, **caractérisé en ce qu'**il contient de 10 à 30 % en poids, de préférence de 10 à 25 % en poids, en particulier de 15 à 25 % en poids de PVC, chaque fois rapportés au poids total de l'agent.

4. Adhésif selon l'une quelconque des revendications 1 à 3, **caractérisé en ce qu'**il contient moins de 20 % en poids, de préférence moins de 10 % en poids, de manière avantageuse moins de 5 % en poids, de manière encore plus avantageuse moins de 1 % en poids de THF, chaque fois rapportés au poids total de l'agent, en particulier **en ce qu'**il est exempt de THF.

5. Adhésif selon l'une quelconque des revendications 1 à 4, **caractérisé en ce qu'**il comprend, à côté du 2-méthyltétrahydrofuranne, encore au moins un solvant cyclique supplémentaire, en particulier la cyclohexanone.

6. Adhésif selon l'une quelconque des revendications 1 à 5, **caractérisé en ce qu'**il comprend au moins un solvant acyclique, en particulier la butan-2-one.

7. Adhésif selon l'une quelconque des revendications 1 à 6, **caractérisé en ce que** la quantité de solvant qu'il contient s'élève de 50 à 95 % en poids, de préférence de 60 à 90 % en poids et en particulier de 70 à 85 % en poids, chaque fois rapportés au poids total de l'agent.

8. Adhésif selon l'une quelconque des revendications 1 à 7, comprenant :
de 20 à 60 % en poids de 2-méthyltétrahydrofuranne ;
de 10 à 50 % en poids de butan-2-one ;
de 10 à 30 % en poids de cyclohexanone ;
de 10 à 25 % en poids de PVC, les proportions se rapportant à chaque fois au poids total de l'agent.

9. Procédé pour la liaison de tuyaux en PVC au moyen d'un raccord via une liaison de matière, dans lequel :
(a) sur la surface de jonction du raccord et/ou sur les surfaces de jonction des extrémités de tubes à relier de cette manière, on applique un adhésif ; et ensuite
(b) on pousse l'un contre l'autre les tubes et le raccord ; et ensuite
(c) on laisse durcir l'adhésif ;
**caractérisé en ce qu'**on met en oeuvre à titre d'adhésif, un adhésif selon l'une quelconque des revendications 1 à 8.

10. Combinaison de tuyaux constituée par au moins deux tuyaux en PVC avec ou sans insert sous la forme d'un raccord entre les extrémités des tuyaux, appropriée pour des conduites pour l'eau potable, des conduites pour l'eau non potable et/ou pour le drainage sous pression, **caractérisé en ce que** les surfaces des joints qui sont reliées les unes aux autres sont fixées avec un adhésif selon l'une quelconque des revendications 1 à 8.
